(19) Europäisches Patentamt

European Patent Office

Office européen des brevets

(11) **EP 0 655 566 B1**

(12) **EUROPÄISCHE PATENTSCHRIFT**

(45) Veröffentlichungstag und Bekanntmachung des Hinweises auf die Patenterteilung:
**27.11.1996 Patentblatt 1996/48**

(51) Int Cl.<sup>6</sup>: **F16F 15/03**

(21) Anmeldenummer: **94108777.7**

(22) Anmeldetag: **08.06.1994**

(54) **Lagerung für schwingendes Bauteil**

Suspension for vibrating element

Suspension pour élément vibrateur

(84) Benannte Vertragsstaaten:
**DE ES FR GB IT NL SE**

(30) Priorität: **24.11.1993 DE 4340034**

(43) Veröffentlichungstag der Anmeldung:
**31.05.1995 Patentblatt 1995/22**

(73) Patentinhaber: **Firma Carl Freudenberg
D-69469 Weinheim (DE)**

(72) Erfinder:
• **Leibach, Markus
  D-69502 Hemsbach (DE)**
• **Feurer, Georg
  D-69509 Mörlenbach (DE)**

(56) Entgegenhaltungen:
EP-A- 0 290 181          EP-A- 0 608 480
DE-A- 3 314 335          DE-C- 4 138 405

**Beschreibung**

Die Erfindung betrifft eine Lagerung für ein schwingendes Bauteil, umfassend ein auf einem Maschinenteil abgestütztes Auflager, ein durch einen Federkörper auf dem Auflager abgestütztes Traglager und eine durch einen Antrieb parallel zur Richtung der betriebsbedingt eingeleiteten Schwingungen hin- und herbewegbaren Trägheitsmasse, die federnd gelagert und bezogen auf die erregende Schwingung gegensinnig regelbar bewegbar ist, wobei die Trägheitsmasse durch eine Feder mit dem Auflager verbunden ist, wobei die Trägheitsmasse und die Feder nicht durch eine Flüssigkeit berührt sind.

Eine solche Lagerung ist aus der DE-A-33 14 335, Figur 12 bekannt. Die Lagerung ist als Motorlager ausgebildet, bestehend aus einem Traglager und einem Auflager, einem beide verbindenden Federelement und einer Dämpfungseinrichtung für die Hemmung der relativen Beweglichkeit, welche aus einem an dem Traglager festgelegten ersten und einem an dem Auflager festgelegten zweiten Dämpfungsteil besteht, wobei die beiden Dämpfungsteile aus Magneten gebildet sind, die sich bei einer Gegeneinanderbewegung abstoßen und bei einer Außeinanderbewegung anziehen, aus einem Magneten und einer im Magnetfeld angeordneten Induktionsspule und aus einem Magneten und einem im Magnetfeld angeordneten Wirbelstromkörper und/oder einer Reibplatte, wobei die Magnetkräfte nach Größe und Richtung gesteuert sind.

Eine weitere Lagerung ist aus der DE-PS 34 33 255 bekannt. Es wird ein schwingungsdämpfendes Lager beschrieben, dessen Dämpfungseinrichtung und eine Kompensationswand aktiv beeinflußbar sind. Über eine einen Prozeßrechner umfassende Steuereinheit wird das Stellglied beaufschlagt, um eine Kompensation von durch Störschwingungen des schwingenden Körpers verursachte Druckänderungen in der Dämpferflüssigkeit zu erreichen. Der Prozeßrechner nimmt ein mit einem Signalgeber erfaßtes Führungssignal, wie zum Beispiel die Motordrehzahl sowie mindestens ein weiteres den Zustand des Körpers kennzeichnendes Signal, auf, und er ist überdies in Abhängigkeit von der Führungsgröße frei programmierbar. Durch eine solche Steuerung sind an und für sich gute Voraussetzungen geschaffen, um die auftretenden körpereigenen Störschwingungen in ihrer Gesamtheit gut kompensieren zu können. Jedoch ist für jeden Anwendungsfall eine umfassende neue Programmierung des Prozeßrechners erforderlich, was insbesondere bei einer Anwendung für Fahrzeuge mit unterschiedlichen Aufbauten und Ausstattungen sehr aufwendig ist. Eine Erfassung der Luftschallkomponente ist damit jedoch nicht möglich. Das sich während des praktischen Fahrbetriebes ergebende Spektrum von möglichen und tatsächlich auftretenden Störschwingungen wird hierdurch jedoch nur unzureichend abgedeckt. Auch ist eine Verwendung der mit großem Aufwand ermittelten und in dem Kennfeld abgelegten Steuerdaten nur so lange sinnvoll, wie sich keine Sekundärveränderungen in dem System als solchem ergibt, beispielsweise eine Veränderung des Gewichtes der abgestützten Maße und/oder eine altersbedingte Veränderung der Elastizität der in dem Gummilager enthaltenen Gummibestandteile sind nicht tolerierbar. In der DE-PS 41 04 168 wird ein hydraulisch bedämpftes Gummilager angegeben, das zur Abstützung eines in einer schwingenden Bewegung befindlichen Maschinenaggregats auf einem Träger dient, bei dem ein flüssigkeitsgefüllter Arbeitsraum ein mit einem elektromagnetischen Antrieb versehener Aktuator zugeordnet ist. Der Antrieb ist mit einer Ansteuerung versehen, die mit einem ersten Signalgeber des Maschinenaggregats signalleitend verbunden ist und die einen Signalgenerator, eine Kennfeldsteuerung und einen Leistungsverstärker als Endstufe umfaßt. Der darin enthaltene Aktuator ist mit einem elektromagnetischen Antrieb versehen, was ermöglicht, die bei einer Einleitung von Schwingungen in das Oberteil des Gummilagers in dem flüssigkeitsgefüllten Arbeitsraum erregten Druckänderungen so zu kompensieren, daß eine Übertragung auf den Träger ausgeschlossen ist. Der komplizierte Aufbau des Lagers sowie der umfangreiche Schaltungsmechanismus zur Regelung der Störschwingungen haben Auswirkung auf eine Steigerung der Kosten.

Bezug nimmt die OS 41 23 254 auf eine Steuerung für aktive Lagerelemente, insbesondere für Lagerelemente zur Lagerung von Triebwerken in Kraftfahrzeugen. Es wird eine Steuerung für einzelne oder in Gruppen angeordnete aktive Lagerelemente, insbesondere aktive Lagerelemente zur Lagerung von Triebwerken in Kraftfahrzeugen angegeben, mit Sensoren zur Erfassung von Störschwingungen und fahrzeugspezifischen Leitgrößen. Diese können zum Beispiel die Motordrehzahl ein eingelegter Gang, die Drosselklappenstellung und dergleichen sein. Diese Steuerung umfaßt eine Steuerschaltung zur Verarbeitung der Signale von den Sensoren und jeweils einem Aktuator zur Beeinflussung des bzw. der Lagerelemente in Abhängigkeit vom Ausgangssignal der Steuerschaltung. Die Steuerschaltung greift dabei auch auf ein memorygespeichertes fahrzeugspezifisches Kennfeld zurück. Dieses Kennfeld ist im Versuch erstellt und aus dem in Verbindung mit den sensorisch erfaßten Größen werden Signale generiert, welche die Steuerschaltung mitverarbeitet. In diesem Kennfeld sind auch die sensorisch, faßbaren Luftübertragungswerte und andere nur mit hohem Aufwand meßbare Größen berücksichtigt. Nachteilig wirkt sich die komplizierte Schaltungsanordnung aus. Es werden zu viele Meßwerte erfaßt, dadurch muß eine größere Speicherkapazität vorhanden sein. Erhöhte Kosten sind daraus die Folge. Auf die Lagerung im einzelnen wird nicht speziell eingegangen.

Der Erfindung liegt die Aufgabe zugrunde, eine Lagerung der eingangs genannten Art derart weiterzuentwickeln, daß die auftretenden Störschwingungen in ihrer Gesamtheit optimal kompensierbar sind.

Diese Aufgabe wird erfindungsgemäß durch die Merkmale von Anspruch 1 gelöst. Auf vorteilhafte Ausgestaltungen nehmen die Unteransprüche Bezug.

Die erfindungsgemäße Lagerung ist dadurch gekennzeichnet, daß die Trägheitsmasse und die Feder in einem von der Anordnung aus Auflager, Traglager und Federkörper separaten Gehäuse aufgenommen sind.

Das Auflager kann aus einem einfach aufgebauten Gummi- und/oder Metallager bestehen und hat den Vorteil, daß keine kompliziert aufgebauten und -handhabbaren Hydrolager verwendet werden müssen. Ein als Hydrolager aufgebautes Lager ist immer in Verbindung mit dem Motor eines Fahrzeuges zu bringen. Dabei kann sich die hohe Temperatur am Motor nachteilig auf die Funktion des Hydrolagers auswirken. Bei Einsatz der erfindungsgemäßen Lagerung, d.h., das Auflager gekoppelt mit einem regelbaren Schwingungstilger zur Störschwingungskompensation ist für jedes schwingende Bauteil einsetzbar. Als schwingendes Bauteil zählt hierzu nicht nur der Motor, sondern auch das Getriebe, ein Klimakompressor, eine Lichtmaschine oder auch Baugruppen wie beispielsweise die Räder eines Fahrzeuges. Der Schwingungstilger kann nicht nur an einer bestimmten Stelle angebracht werden, sondern er kann zum Beispiel am Hilfsrahmen, am Längsträger, am Motor oder auch an jeder beliebigen Stelle der Karosserie befestigt werden. Beim Schwingungstilger ist es vorgesehen, daß die Eigenfrequenz des Schwingungssystems, das aus der Trägheitsmasse und dem Federelement gebildet ist, höchstens so groß ist wie die Frequenz der hin- und hergehenden Bewegung. Die Trägheitsmasse ist durch eine an der Tragplatte relativ unbeweglich festgelegten Tauchspule bewegbar. Das Federelement ist durch die Tauchspule verformbar. Die Trägheitsmasse ist durch einen Topfmagneten gebildet, der die Tauchspule radial innen und außen, zumindest teilweise, konzentrisch umschließt und durch eine Führung parallel zur Achse der Tauchspule geführt ist. Hierbei ist von Vorteil, daß bei Einleitung von Schwingungen durch die parallele Führung relativ zueinander beweglichen Teile und einem Luftspalt, der von einem Magnetfeld durchsetzt ist, der sich im wesentlichen parallel zur Bewegungsrichtung erstreckt, eine stets gleichbleibende Spaltbreite erhalten bleibt und der Schwingungstilger dadurch ein lineares Betriebsverhalten aufweist. Das Magnetfeld verläuft im Luftspalt radial und erzeugt damit keine statische Vorspannung auf das Federelement in Richtung der vorgesehenen Bewegungsrichtung. Dadurch, daß das Federelement durch die statische Magnetkraft nicht statisch belastet ist, kommt es auch bei zunehmender Gebrauchsdauer nicht zu bleibenden Setzungen des Federmaterials. Der Schwingungstilger ermöglicht die eingeleiteten Schwingungen aktiv zu reduzieren. Der Schwingungstilger kann weiterhin gezielt zu Schwingungen angeregt werden, um die Schwingungen im angrenzenden Bauteil hinsichtlich ihrer Frequenz und Schwingungsstärke in gewünschter Weise zu verändern. Der Schwingungstilger bestehend aus Trägheitsmasse und Feder ist in einem separaten Gehäuse untergebracht. Der Topfmagnet, der aus einem Magnetgehäuse und einem Magnet besteht, bildet eine seismische Masse, die parallel zur Achse der Tauchspule beweglich ist. Das Gehäuse ist dabei an der von dem Auflager abgewandten Seite des Maschinenteils befestigt. Bei Einleitung eines Wechselstroms in die Tauchspule wird eine Kraft zwischen dem Topfmagnet und der an dem Maschinenteil befestigten Tragplatte erzeugt, die sich einerseits an der trägen Masse des Topfmagnetes und andererseits an dem Maschinenteil abstützt. Bei einer derartigen Ausgestaltung ist von hervorzuhebender Bedeutung, daß die Tauchspule durch keine separat angebrachte Halterung an dem Maschinenteil befestigt werden muß. Um gute Gebrauchseigenschaften während einer langen Gebrauchsdauer zu erreichen und den aktiven, regelbaren Schwingungstilger in verschiedenen Einbaulagen einsetzen zu können, ist zwischen der Tragplatte, die den Tauchspulenträger bildet und dem Topfmagnet eine elastische Aufhängung in Form des Federelements vorgesehen, die den Topfmagnet in einer definiert räumlichen Nullage hält. Die Führung führt den Topfmagnet in bezug auf die Tauchspule so, daß auch bei einer Einwirkung von Querkräften auf den Topfmagnet keine unzulässige Reibung oder Krafteinwirkung zwischen Magnet und der Spule auftritt. Die Größe der Trägheitsmasse des Topfmagnets kann in einem Verhältnis zur Größe des schwingenden Bauteils von 1/100 bis 1/1000 stehen. Das Federelement kann aus einem elastomeren Werkstoff bestehen. Hierbei ist von Vorteil, daß der Aufbau des Schwingungstilgers teilearm und unkompliziert ist. In Abhängigkeit von der Trägheitsmasse des Topfmagneten und der zu tilgenden Schwingung kann die Federsteifigkeit des Federelements durch eine entsprechende Werkstoffauswahl beeinflußt werden.

Für eine deutlich verbesserte Isolierung der vom schwingenden Bauteil erregten, akustisch störenden Schwingungen in bezug auf das Maschinenteil, kann der Schwingungstilger mit einer Regelschaltung verbunden sein. Dabei ist vorgesehen, daß dem ersten Signalgeber ein Signalgenerator nachgeschaltet ist, der zwei harmonische, in bezug aufeinander phasenverschobene erste Signale einer miteinander und den Schwingungen des schwingenden Bauteils übereinstimmende Frequenz erzeugt sowie ein zweites Signal, das die Frequenz in charakteristischer Weise wiedergibt, daß dieses zweite Signal Kennliniengliedern, deren funktionaler Zusammenhang zwischen Eingangs- und Ausgangssignal willkürlich festgelegt wird, zugeführt wird. Die Ausgangssignale dieser Kennlinienglieder werden mit den ersten Signalen des Sinusgenerators multipliziert und die so erhaltenen dritten Signale paarweise addiert. Die so erhaltenen Signale werden dann jeweils mit einem vierten Signal eines Sensors, welches Relativbewegungen des Maschinenteils in charakteristischer Weise wiedergibt, multipliziert. Die so erhaltenen fünften Signale werden jeweils einem willkürlich festzulegenden Übertragungsglied zugeführt, das oberhalb einer willkürlich festlegbaren Frequenz ein Tiefpaßverhalten aufweist. Die so erhaltenen sechsten Signale werden mit den Signalen des Sinusgenerators multipliziert und die so erhaltenen siebten Signale zu einem achten Signal addiert. Dieses wird in einem Leistungsverstärker verstärkt und das zur Betätigung des Schwingungstilgers verwendet wird. Besonders vorteilig hat sich erwiesen, wenn mindestens einem der Sensoren ein Analog-Digital-Wandler nachgeschaltet und dem Leistungsverstärker ein Analog-Digital-Wandler vorgeschaltet ist. Dadurch wird erreicht, daß die Ansteuerung des Schwingungstilgers bis zu einem sehr hohen Grad unter Verwendung von digitalen Steuerbauteilen realisierbar ist, wobei insbesondere der Einsatz von frei programmierbaren Bauteilen sinnvoll ist. Prinzipiell lassen sich Sinusgenerator, Kennlinienglieder, Summationsglieder, Verzweigungspunkte, Multiplizierer, Übertragungsglied und Leistungsverstärker ganz oder teilweise durch digitale Bauteile realisieren. Die Realisierung der Funktionen ist frei wählbar. Besonders vorteilhaft ist eine digitale Realisierung der Kennlinienglieder, wobei auch komplizierte funktionale Zusammenhänge zwischen die Frequenz der Schwingungen schwingenden Bauteils charakterisierenden zweiten Signale des Sinusgenerators und den Ausgangssignalen der Kennlinienglieder realisiert werden können. Solche Zusammenhänge können abschnittsweise für jeweils bestimmte Frequenzbereiche als konstant festgelegt und dabei in Form einer Tabelle gespeichert werden. Die Regelung ist flexibel anpaßbar an verschiedene Betriebsbedingungen für solche digitale Realisierung. Mitunter ist es auch notwendig den A/D-Wandlern analoge Tiefpaßfilter vorzuschalten, um Aliasingeffekte zu vermeiden und dem A/D-Wandler ein analoges Tiefpaßfilter nachzuschalten, um den treppenförmigen Verlauf des auszugebenden Signals zu glätten und das so geglättete Signal dem Leistungsverstärker zuzuführen. Diese zusätzlichen Filter müssen gegebenenfalls in den mit Hilfe der Kennlinienglieder realisierten Funktionen berücksichtigt werden. Weiterhin soll erreicht werden, daß die Phasenverschiebung zwischen den beiden vom Signalgenerator erzeugten ersten Signalen ebenfalls abhängig von den vom Signalgenerator erzeugten, die Schwingungsfrequenz des schwingenden Bauteils charakterisierenden zweiten Signals bestimmt wird. Dies läßt sich beispielsweise unter Verwendung von Totzeitgliedern, analogen oder digitalen Filtern, Schieberegistern und so weiter, erreichen. Mit dieser Schaltung erfolgt die Regelung des Schwingungstilgers so, daß nur eine sehr geringe Anzahl von Rechenoperationen erforderlich ist. Bei der Realisierung der Regelung des Schwingungstilgers ist der erforderliche Speicherbedarf gering. Gespeichert werden müssen nur die in einem Vorversuch ermittelten funktionalen Zusammenhänge, die in der Regelung mit Hilfe der Kennlinienglieder realisiert werden. Die Regelung des Schwingungstilgers ist für sehr große Frequenzbereiche geeignet und zeichnet sich in regelungstechnischer Hinsicht durch eine besonders große Robustheit aus. Veränderungen des dynamischen Verhaltens von Leistungsverstärker, Schwingungstilger, Maschinenteil und Sensor in weiten Bereichen können toleriert werden. Die Regelung kann auf schnelle Frequenzänderungen der zu isolierenden Schwingungen reagieren. Beispielsweise für Frequenzänderungen, die durch Drehzahländerung eines schwingenden Bauteils verursacht sind.

Ein Ausführungsbeispiel der Erfindung ist nachstehend anhand von Zeichnungen näher erläutert. Es zeigen:

Fig. 1 die erfindungsgemäße Lagerung mit der Regelungsschaltung.

Fig 2 den aktiven Schwingungstilger im Schnitt dargestellt.

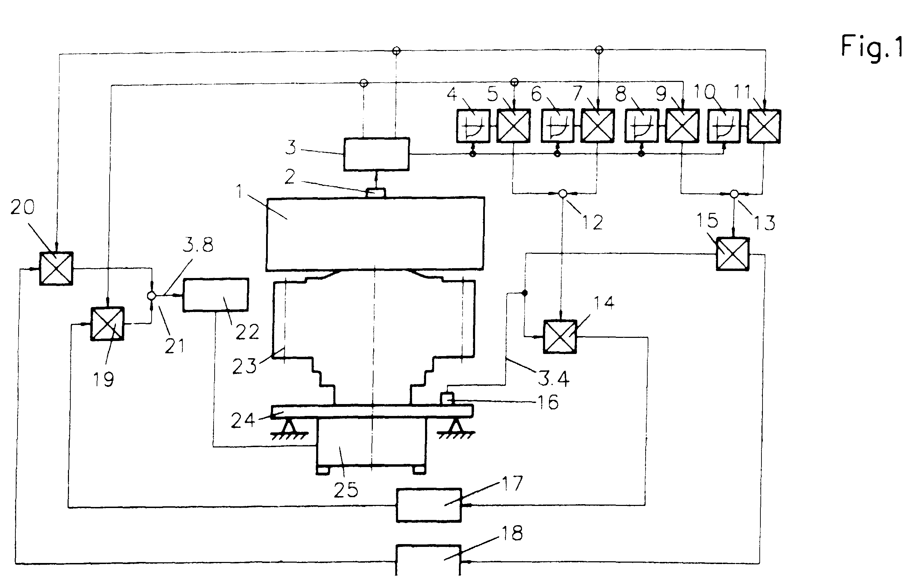

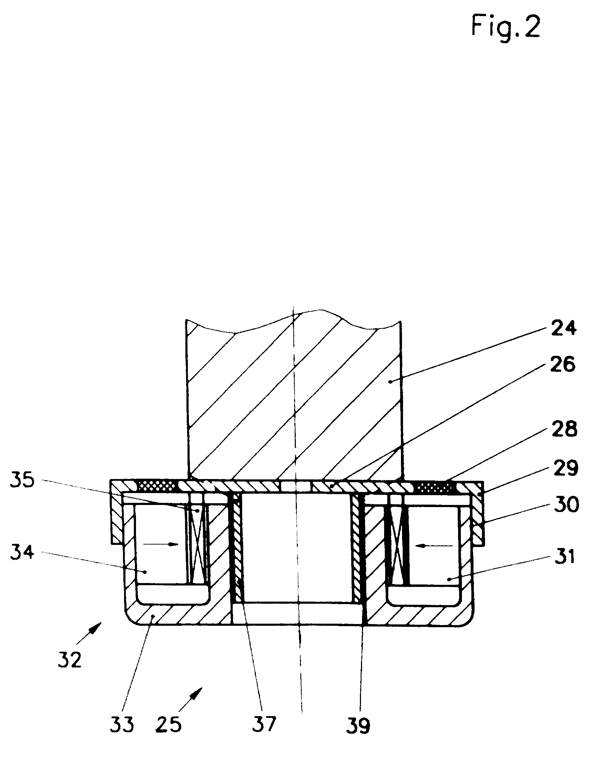

In Fig. 1 ist die erfindungsgemäße Lagerung im Zusammenwirken mit einer Regelungsschaltung gezeigt. Die Fig. 2 beschreibt den Aufbau eines aktiven Schwingungstilgers, wie er bei dieser Ausführung zur Anwendung kommt.

Die Lagerung für ein schwingendes Bauteil 1 umfaßt ein Auflager 23, welches auf einem Maschinenteil 24, beispielsweise der Karosserie, abgestützt ist. Das Auflager 23 ist durch eine Feder mit der Trägheitsmasse eines Schwingungstilgers 25 gekoppelt. Dieses Schwingungssystem, bestehend aus der Trägheitsmasse 32 und einer Feder 28 ist nicht durch eine Flüssigkeit berührt. Das Auflager 23 kann aus einem einfach aufgebauten Gummi- und/oder Metallager bestehen. Die Koppelung des Auflagers 23 mit dem Schwingungstilger 25 dient zur Schwingungskompensation aller auftretenden Störschwingungen für jedes schwingende Bauteil 1.Schwingende Bauteile sind beispielsweise der Motor, das Getriebe, der Klimakompressor, die Lichtmaschine oder auch Baugruppen wie die Räder eines Fahrzeugs. D.h., daß die erfindungsgemäße Vorrichtung nicht nur an einer bestimmten Stelle des Fahrzeugs angebracht werden kann, sondern an jeder Stelle, wo sich schwingende Bauteile befinden. Die Fig. 2 beschreibt einen zur Anwendung kommenden Schwingungstilger 25. Es wird ein aktiver Schwingungstilger 25 gezeigt, der an einem hin- und herbewegbaren Maschinenteil 24 festgelegt ist. Der Schwingungstilger 25 umfaßt eine Tragplatte 26, die mit dem Maschinenteil 24 verbunden ist. In dem hier dargestellten Ausführungsbeispiel sind das Maschinenteil 24 und Tragplatte 10 miteinander verschraubt. Die Trägheitsmasse des Schwingungstilgers 25 ist durch einen Topfmagneten 32 ausgebildet, wobei der Topfmagnet 32 ein Magnet 34 und ein Magnetgehäuse 33 umfaßt. Die Trägheitsmasse ist durch eine Veränderung der Masse des Magnetgehäuses 33 variierbar. Dadurch und durch die ebenfalls variabel gestalteten Federelemente 28, kann die Eigenfrequenz des Schwingungstilgers 25 auf einen gewünschten Wert festgelegt werden. Der Topfmagnet 32 umschließt eine Tauchspule 35 radial innen- und außenseitig, wobei die Tauchspule 35 relativ unbeweglich an der Tragplatte 26 befestigt ist. Die Tauchspule 35 ist jeweils mit einem hier nicht dargestellten Anschluß versehen und durch eine Versorgungseinheit mit Wechselstrom beaufschlagbar. Die Tauchspule 35 ist parallel zur Bewegung des Maschinenteils 24 angeordnet, wobei der Topfmagnet 32 durch ein Federelement 28 an der Tragplatte 26 schwingfähig festgelegt ist. Durch die Ansteuerung der Tauchspule 35 können die in das Maschinenteil 24 eingeleiteten Schwingungen reduziert oder durch Einleitung einer Gegenschwingung getilgt werden. In Abhängigkeit von der Schwingung des Maschinenteils 24 wird ein Wechselstrom in die Tauchspule 35 eingeleitet, so daß eine Kraft zwischen Topfmagnet 32 und der Tragplatte 26 entsteht, die sich in axialer Richtung an den einander benachbarten, schwingfähig zueinander aufgehängten Teilen abstützt. Der Topfmagnet 32 besteht aus dem Magnetgehäuse 33 und dem Magnet 34, der als in radialer Richtung magnetisierter Ringmagnet 31 ausgebildet ist. Das Magnetgehäuse 33 ist im Bereich seines Außenumfangs durch eine Preßpassung 30 mit dem Randbereich 29 der Tragplatte 26 verbunden, wobei die Tragplatte 26 und der Randbereich 29 durch das Federelement 28 aus elastomerem Werkstoff miteinander verbunden sind. Geführt wird der Topfmagnet 32 im Bereich seines Innenumfangs durch einen axialen Vorsprung 37, der rohrförmig ausgebildet und relativ unbeweglich an der Tragplatte 26 befestigt ist. Der Vorsprung 37 ist im Bereich seines Außenumfangs mit einer reibungsverringernden Oberflächenbeschichtung 39 versehen, um das Ansprechverhalten des Schwingungstilgers 25 bei Einleitung von Wechselströmen zu verbessern. Mit dem zur Anwendung kommenden Schwingungstilger 25 wird eine Isolierung von harmonischen Schwingungen ermöglicht, wie sie z.B. von einem unwuchterregten schwingenden Bauteil 1 ausgehen. Die Frequenz harmonischer Unwuchtschwingungen stehen in einem konstanten Verhältnis zur Drehzahl eines schwingenden Bauteils 1 und ist damit bestimmbar. Es ist somit ein Signal 3.8 zu erzeugen, dessen Frequenzen mit der Frequenz der harmonischen Unwuchterregung übereinstimmt. Dieses Signal muß in Betrag und Phase so gestaltet sein, daß damit, falls man dieses Signal 3.8 über einen Leistungsverstärker 22 dem Schwingungstilger 25 zuführt, die gewünschte Schwingungsisolation erreicht wird. Für die weitere Betrachtung ist davon auszugehen, daß es sich bei dem schwingenden Bauteil 1 beispielsweise um einen Vierzylindermotor handelt. Bei dieser Art von Motoren treten beispielsweise Schwingungen auf, deren Frequenz der doppelten Motordrehzahlen entspricht.

Der Signalgeber 2 liefert ein periodisches Zeitsignal, dessen Periodendauer in einem festen Verhältnis zur Periodendauer der zu isolierenden Schwingung steht.

Ein solcher Signalgeber kann beispielsweise die Bewegung des Bauteils 1 auswerten, wobei u.U. störende Signalanteile herausgefiltert werden müssen. Eine andere Möglichkeit besteht darin, einen Sensor, der eine konstante Anzahl von Impulsen pro Umdrehung eines rotierenden Bauteiles abgibt, zu verwenden. Ein Beispiel dafür ist ein sogenannter OT-Sensor. Dieser Sensor signalisiert, wann sich ein bestimmter Kolben einer Hubkolbenmaschine im oberen Totpunkt befindet. Man erhält also genau einen Impuls pro Kurbelwellenumdrehung.

Der Signalgenerator 3 erhält das Zeitsignal des Signalgebers 2 und generiert daraus zwei harmonische Schwingungen unterschiedlicher Phasenlage, wobei die Phasendifferenz zwischen diesen beiden harmonischen Schwingungen auch frequenzabhängig gesteuert sein kann. Die Frequenz dieser harmonischen Schwingungen ist identisch mit der Frequenz der zu isolierenden Schwingung.

Die Ausgangssignale des Sinusgenerators werden im folgenden mit

$$u_1(t) = \sin(wt)$$

$$u_2(t) = \sin(wt + phi(w))$$

bezeichnet. Dabei ist w die Kreisfrequenz der zu isolierenden Schwingung.

Folgende Spezialfälle sind denkbar:

$$phi(w) = konst = 90°$$

damit gilt:

$$u_1(t) = \sin(wt)$$

$$u_2(t) = \sin(wt + 90°) = \cos(wt)$$

oder

$$u_1(t) = \sin(wt)$$

$$u_2(t) = \sin(wt - wT) = \sin(w(t-T)) = u_1(t-T)$$

wobei der frequenzabhängige Phasenwinkel mit

$$\text{phi}(w) = -\, w{*}T$$

gebildet wird, wobei T eine geeignete Totzeit ist.

Man erhält $u_2$, indem man $u_1$ um T zeitlich verzögert. Dies kann beispielsweise bei einer digitalen Realisierung sinnvoll sein. Stellt T ein ganzzahliges Vielfaches des Abtastzeitintervalles dar, so läßt sich die zeitliche Verschiebung von $u_1$ sehr einfach unter Verwendung eines Schieberegisters realisieren. Diese Möglichkeit kann insbesondere dann angebracht sein, wenn der Betriebsdrehzahlbereich des Aggregates begrenzt ist.

Für die Ausführung der Regelung des Schwingungstilgers 25 ist es notwendig, daß phi(w) kein ganzzahliges Vielfaches von 180° sein darf und von Null verschieden ist.

Zusätzlich wird vom Signalgenerator ein Signal generiert, das die Frequenz der Unwucht des unwuchterregten Aggregates charakterisiert. Ein solches Signal kann beispielsweise direkt proportional zur Frequenz oder Periodendauer der entsprechenden Schwingung sein.

Die notwendigen zugehörigen Bestandteile eines solchen Signalgenerators können

- PLL-Schaltungen
- Trackingfilter
- digitale Oszillatoren

sein.

Das Ausgangssignal $u_1(t)$ des Signalgenerators 3 wird mit dem Ausgangssignal $r_1(t)$ des Übertragungsgliedes 17 unter Verwendung eines Multiplizierers 19 gebildet; das Ausgangssignal $u_2(t)$ des Signalgenerators 3 wird mit dem Ausgangssignal $r_2(t)$ des Übertragungsgliedes 18 unter Verwendung des Multiplizierers 20 gebildet. Man erhält so die Signale

$$v_1(t) = r_1(t){\cdot}u_1(t) = r_1(t){\cdot}\sin(wt),$$

$$v_2(t) = r_2(t){\cdot}u_2(t) = r_2(t){\cdot}\sin(wt + \text{phi}(w)),$$

d.h. man führt eine lineare Amplitudenmodulation durch, wobei w die Kreisfrequenz der Unwuchterregung bzw. die Frequenz der Schwingungen des Maschinenteils 24 darstellt.

Die Signale $v_1$ und $v_2$ werden unter Benutzung eines Addierers 21 summiert und dem Leistungsverstärker 22 zugeführt. Dieser steuert den Schwingungstilger 25 an und verursacht damit eine Bewegung des Maschinenteils 24. Diese vom Schwingungstilger 25 verursachte Bewegung wird der von der Unwucht des schwingenden Bauteils 1 verursachten Bewegung überlagert. Die Gesamtbewegung wird vom Signalgeber 16 erfaßt.

Im folgenden wird angenommen, daß Leistungsverstärker 22, Schwingungstilger 25, Maschinenteil 24 und der Signalgeber 2 lineares Verhalten aufweisen. Im folgenden werden diese miteinander verbundenen Glieder als Teilsystem bezeichnet.

Für das lineare Teilsystem gilt im eingeschwungenen Zustand, daß das harmonische Eingangssignal des Leistungsverstärkers 22

$$x(t) = r_1(t)\sin(wt) + r_2(t)\sin(wt+\text{phi}(w))$$

am Ausgang des Sensors 16 das harmonische Ausgangssignal 3.4

$$g(t) = r_1(t)\text{abs}(G(jw))\sin(wt+\arg(G(jw)) + rT2(t)\text{abs}(G(jw))\sin(wt+\text{phi}(w)+\arg(g(jw)))$$

jedoch mit veränderter Amplitude abs$(G(jw))$ und Phase arg$(G(jw))$ erzeugt. Dabei ist $G(jw)$ die Stellübertragungsfunktion zwischen Verstärkereingang (22) und Sensorausgang (16) und $r_1(t)$ und $rT2(t)$ geeignet festzulegende Amplituden.

Weiterhin gilt, daß eine harmonische Bewegung des Bauteils 1 am Signalgeber 16 das harmonische Signal

$$z(t) = Z(t)\sin(wt + gamma(w))$$

erzeugt.

Die Amplitude $Z(t)$ und die Phasenlage gamma(w) dieses Signales werden durch die Unwuchtkräfte des schwingenden Bauteils 1 sowie vom dynamischen Verhalten beeinflußt.

Vereinfachend wird im folgenden angenommen, daß nur periodische Signale auftreten. Damit läßt sich die durch das Sensorsignal $s(t)$ charakterisierte Bewegung des Maschinenteils 24 zusammen mit der Auswirkung auf das Signal am Leistungsverstärkereingang $x(t)$ gemäß

$$s(t) = r_1(t) \, abs(G(jw)) \, \sin(wt + arg(G(jw)))$$

$$+ r_2(t) \, abs(G(jw)) \, \sin(wt + phi(w) + arg(G(jw)))$$

$$+ Z(t) \, \sin(wt + gamma(w))$$

angeben.

Die Anpassung der Amplituden $r_1(t)$ und $r_2(t)$ soll nun so erfolgen, daß die Bewegung des Maschinenteils 24, gekennzeichnet durch das Sensorsignal $s(t)$ in kurzer Zeit minimiert wird. Damit dies gelingt, ist es bei dem hier vorgestellten Verfahren notwendig, die Stellübertragungsfunktion des Teilsystems in einem Vorversuch zu ermitteln.

Die gemessene Übertragungsfunktion $Gm(jw)$ zwischen Leistungsverstärkereingang 22 und Sensor 16 werden hinsichtlich Betrag $abs(Gm(jw))$ und Phase $arg(Gm(jw))$ aufgeteilt und somit die Kennlinien

$$a(w) = \frac{1}{abs(Gm(jw))} \, [\cos(arg(Gm(jw)))$$
$$- \frac{\cos(phi(w))\sin}{\sin(phi(w))} \, (arg(Gm(jw)))\,]$$

$$b(w) = \frac{1}{abs(Gm(jw))} \, \frac{\sin(arg(G(jw)))}{\sin(phi(w))}$$

$$c(w) = \frac{1}{abs(Gm(jw))} \, \cos(phi(w) + arg(Gm(jw)))$$
$$- \frac{1}{abs(G(jw))} \, \frac{\cos(phi(w))}{\sin(phi(w))} \, \sin(phi(w) + arg(Gm(jw)))$$

$$d(w) = \frac{1}{abs(Gm(jw))} \, \frac{\sin(phi(w) + arg(G(jw)))}{\sin(phi(w))}$$

Der Wertebereich von w wird durch den Frequenzbereich der zu isolierenden Schwingung des schwingenden Bauteils 1 festgelegt.

Den Kennliniengliedern 4, 6, 8 und 10 wird das, die Frequenz der Aggregatschwingungen charakterisierende Signal des Signalgenerators 3 zugeführt.

Die Ausgangssignale der Kennlinienglieder 4, 6, 8 und 10 werden mit a(w), b(w), c(w) und d(w) bezeichnet.

Dem Multiplikationsglied 5 wird das Signal $u_1(t)$ und a(w) zugeführt. Das Multiplikationsglied 7 bildet das Produkt von $u_2(t)$ und b(w). Die beiden so erhaltenen Produkte werden unter Verwendung des Summierers 12 addiert.

Das so erhaltene Signal $t_1(t)$ läßt sich durch

$$t_1(t) = a(w) \cdot u_1(t) + b(w) \cdot u_2(t)$$

$$= a(w) \cdot \sin wt + b(w) \cdot \sin(wt + phi)$$

$$= \frac{1}{abs(Gm(jw))} \, \sin(wt + arg(Gm(jw)))$$

beschreiben.

Entsprechend wird das Signal $t_2(t)$ unter Verwendung der Kennlinienglieder 8 und 10, der Multiplikatoren 9 und 11 sowie des Summierers 13 generiert.

$$t_2(t) = c(w) \cdot u_1(t) + d(w) \cdot u_2(t)$$

$$= c(w) \cdot \sin(wt) + d(w) \cdot \sin(wt + phi)$$

$$= \frac{1}{abs\,(\,Gm\,(\,jw\,)\,)}\,\sin(wt + phi(w) + arg(Gm(jw)))$$

Das Signal $t_1(t)$ wird nun mit dem Ausgangssignal s(t) des Signalgebers 16 unter Verwendung eines Multiplizierers 14 multipliziert. Ein weiterer Multiplizierer 15 bildet das Produkt von $t_2(t)$ und dem Ausgangssignal s(t) des Signalgebers 16.

Unter Beachtung von

$$\sin(x)\,\sin(y) = 0.5(\cos(x\text{-}y) - \cos(x + y))$$

$$G(jw) = Gm(jw)$$

erhält man so:

$$s(t)\,t_1(t) =$$

$$r_1(t)0.5(1 - \cos(2wt + 2\,arg(G(jw))) \, )$$

$$+ \, r_2(t)0.5(\cos(phi(w)) - \cos(2wt + 2\,arg(G(jw)) + phi(w)))$$

$$+ \frac{Z\,(t)\,0.5}{abs\,(\,g\,(\,jw\,)\,)}\,[\cos(gamma(w) - arg(G(jw)))$$

$$- \cos(2wt + gamma(w) + arg(G(jw))) \, ]$$

Ebenso gilt

$$s(t)\,t_2(t) =$$

$$r_1(t)\,0.5\,(\cos(\text{-}phi(w)) - \cos(2wt + 2\,arg(G(jw))) \, )$$

$$+ \, r_2(t)0.5\,(1\text{-}\cos(2wt + 2\,arg(G(jw)) + phi(w)) \, )$$

$$+ \frac{Z\,(t)\,0.5}{abs\,(\,g\,(\,jw\,)\,)}\,[\cos(gamma(w) - phi(w) - arg(G(jw)))$$

$$- \cos(2wt + gamma(w) + arg(G(jw))) \, ]$$

Das Signal $s(t) \cdot t_1(t)$ wird dem Übertragungsglied 17, das Signal $s(t) \cdot t_2(t)$ dem Übertragungsglied 18 zugeführt.

Innerhalb dieser Übertragungsglieder wird die Amplitude $r_1(t)$ bzw. $r_2(t)$ berechnet. Wichtig ist, daß nur geringe Signalanteile mit der Frequenz 2w in den Ausgangssignalen der Übertragungsglieder enthalten sind. Dazu können in einem ersten Schritt diese Signalanteile mittels Tiefpaßfilter stark abgeschwächt werden. Nach einer solchen Tiefpaßfilterung können dann auf die so erhaltenen Signale bekannte Regelalgorithmen angewendet werden. Ebenso ist es möglich, zuerst einen solchen Regelalgorithmus auf $t_1$ und $t_2$ anzuwenden und anschließend eine Tiefpaßfilterung durchzuführen oder einen Regelalgorithmus anzuwenden, der selbst das gewünschte Tiefpaßverhalten aufweist. Die letztgenannte Bedingung kann u.U. von einem Regler, der nur einen Integralanteil aufweist, erfüllt werden.

In der weiteren Funktionsbeschreibung wird zunächst eine Tiefpassfilterung durchgeführt und anschließend ein geeigneter Regelalgorithmus angewendet.

Die Eckfrequenz des Tiefpaßfilters wird so festgelegt, daß die harmonischen Signale mit der Frequenz von 2w stark abgeschwächt werden und somit in der weiteren Betrachtung vernachlässigt werden können, wobei die Eckfrequenz jedoch nicht zu niedrig festgelegt werden sollte, um eine gute Dynamik des Gesamtsystems zu erhalten.

$r_1(t)$, $r_2(t)$, $Z(t)$ werden durch die Tiefpaßfilterung kaum beeinflußt, da sie relativ langsame Signale darstellen. Der Einfluß der Tiefpaßfilterung wird durch ' gekennzeichnet.

Nach Durchführung der Tiefpaßfilterung der Signale $s(t)t_1(t)$ $s(t)$ $t_2(t)$ liegen die Signale

$$e_1(t) = 0.5 \cdot (r_1(t)' + r_2(t)' \cos(phi(w))$$

$$+ \frac{Z(t)'}{abs(G(jw))} \cos(gamma(w) - arg(G(jw)))$$

$$e_2(t) = 0.5(r_1(t)' \cos(-phi(w) + r_2')$$

$$+ \frac{Z(t)'}{abs(G(jw))} \cos(gamma(w) - phi(w) - arg(G(jw))))$$

vor.

Diese Gleichungen zeigen, daß die Reglereingangssignale $e_1(t)$, $e_2(t)$ jeweils von $r_1'$ und $r_2'$ abhängt. Man hat es somit mit gekoppelten Regelkreisen zu tun. Die Kopplung entfällt, wenn gilt: phi(w) = konst = 90°.

Diese Koppelung ist am stärksten ausgeprägt, wenn cos(phi(w)) große Werte annimmt, d.h. wenn phi(w) klein ist (bzw. in der Nähe von ganzzahligen Vielfachen von 180° liegt). Nähere Untersuchungen haben gezeigt, daß durch die Kopplungsterme die Dynamik des Gesamtsystems beeinflußt wird, die Funktion jedoch gewährleistet ist.

Die Herleitung der obigen Gleichungen wurde unter den Voraussetzungen gemacht, daß der gemessene Frequenzgang $G_m(jw)$ und der tatsächlich gegebene Frequenzgang $G(jw)$ in guter Näherung übereinstimmen. Diese Voraussetzung läßt sich durch entsprechende Messungen erreichen. Zusätzlich wurde angenommen, daß Einschwingvorgänge vernachlässigt werden können.

Diese Voraussetzung wird in vielen Fällen dadurch erfüllt, daß die auftretenden Größen sich kontinuierlich verändern, d.h. daß sprungartige Änderungen in der Praxis nicht auftreten.

Eine nähere Betrachtung der obenstehenden Gleichungen zeigt, daß $e_1$ bei konstanter Frequenz direkt proportional zu $r_1$ bzw. $r_2$ ist. Die Beziehung zwischen $e_1$ und $r_1$ bzw. $r_2$ wird nur durch den Winkel phi(w) beeinflußt. Eine Abhängigkeit vom Frequenzgang $G(jw)$ tritt in diesem Zusammenhang nicht auf. Entsprechendes gilt für die Beziehung zwischen $e_2$ und $r_1$ bzw. $r_2$.

Die Dynamik des Gesamtsystemes wird im wesentlichen bestimmt durch die Tiefpaßfilterung, den Regelalgorithmus, sowie der Phasendifferenz phi(w). Der Einfluß des Frequenzganges $G(jw)$ auf die Dynamik des Gesamtsystems ist vernachlässigbar.

Der Zusammenhang zwischen den Signalen $e_1$ und $e_2$ und den Reglerausgängen $r_1$ und $r_2$ wird durch den Regelalgorithmus festgelegt. Im praktischen Versuch haben sich PI-Regler gemäß.

$$r_1(t) = k_p \cdot e_1(t) + \frac{k_p}{T_I} \int_0^t e_1(t')\, dt',$$

$$r_2(t) = k_p \cdot e_2(t) + \frac{k_p}{T_I} \int_0^t e_2(t')\, dt',$$

bewährt. Dabei ist
$k_p$ der Verstärkungsfaktor und
$T_I$ die Integrationszeitkonstante des Reglers.

EP 0 655 566 B1

Das dynamische Verhalten des Schwingungstilgers 25, des Leistungsverstärkers 22, des Signalgebers 2 und des Maschinenteils 24 kann von Umgebungseinflüssen beeinflußt werden. Eine Berücksichtigung derartiger Einflüsse ist möglich, indem die Kennlinien zu Kennfeldern erweitert werden, wobei die das dynamische Verhalten beeinflussenden Größen, zusätzliche Eingangsgrößen der Kennfeldsteuerung darstellen. Diese zusätzlichen Eingangsgrößen werden unter Verwendung von Sensoren ermittelt und die so erhaltenen, zusätzlichen Eingangssignale den Kennfeldern zugeführt. Insbesondere an dem Maschinenteil 24 können derartige Signale erfaßt und damit die Auswirkungen auf das dynamische Verhalten dieser Bauelemente berücksichtigt werden. Das Übertragungsglied kann oberhalb einer willkürlich festzulegenden Eckfrequenz ein Tiefpaßverhalten aufweisen, wobei diese Eckfrequenz der Frequenz der zu unterdrückenden Schwingung des Bauteils 1 kontinuierlich nachgeführt wird. Hierdurch ergibt sich eine weitere Verbesserung des dynamischen Verhaltens des Gesamtsystems.

Wenn es möglich ist, die Schwingungen des Bauteils 1 vollständig oder teilweise durch die Kombination zweier oder mehrerer harmonischer Schwingungen zu beschreiben, kann die Schaltung derartig erweitert werden, daß sämtliche harmonischen Schwingungen isoliert werden. Dazu werden dem Signalgeber zusätzliche Signalgeneratoren nachgeschaltet. Jeder dieser Signalgenerator erzeugt zwei harmonische, in bezug aufeinander phasenverschobene, erste Signale, deren Frequenz mit einer Frequenz einer Schwingungskomponente der Aggregatschwingungen übereinstimmt. Zusätzlich erzeugt jeder Signalgenerator je ein zweites Signal, das die jeweils erzeugte Frequenz in charakterisierender Weise wiedergibt.

Jedem dieser Signalgeneratoren werden die Kennlinienglieder 4, 6, 8, 10, die Multiplizierer 5, 7, 9, 11, 14, 15, 19, 20, die Übertragungsglieder 17, 18, sowie die Summierer 12, 13 nachgeschaltet.

Jeder dieser Multiplizierer 14 und 15 wird signalleitend mit dem Sensor 16 verbunden.

Die Ausgangssignale der Multiplizierer 19 und 20 werden signalleitend mit zusätzlich eingefügten Eingängen des Summierers 21 verbunden.

Zusammenfassend bedeutet dies, daß bei gleichzeitiger Isolierung mehrere Schwingungskomponenten unterschiedlicher Frequenz die Schaltung entsprechend mehrfach aufgebaut wird, wobei der Sensor 16, der Summierer 21 sowie der Leistungsverstärker 22 von den so entstandenen Kreisen gemeinsam benutzt werden.

**Patentansprüche**

1. Lagerung für ein schwingendes Bauteil (1), umfassend ein auf einem Maschinenteil (24) abgestütztes Auflager (23), ein durch einen Federkörper auf dem Auflager (23) abgestütztes Traglager und eine durch einen Antrieb parallel zur Richtung der betriebsbedingt eingeleiteten Schwingungen hin- und herbewegbare Trägheitsmasse (32), die federnd gelagert und bezogen auf die erregende Schwingung gegensinnig regelbar bewegbar ist und durch eine Feder (28) mit dem Auflager (23) verbunden ist, wobei die Trägheitsmasse ( 32) und die Feder (28) nicht durch eine Flüssigkeit berührt sind, dadurch gekennzeichnet, daß die Trägheitsmasse (32) und die Feder (28) in einem von der Anordnung aus Auflager (23), Traglager und Federkörper separaten Gehäuse (33) aufgenommen sind.

2. Lagerung nach Anspruch 1, gekennzeichnet dadurch, daß das Verhältnis aus der jeweiligen Größe der Trägheitsmasse (32) und des schwingenden Bauteils (1) 1/100 bis 1/1000 beträgt.

3. Lagerung nach einem der Ansprüche 1 bis 2, gekennzeichnet dadurch, daß das Gehäuse (33) an der von dem Auflager (23) abgewandten Seite des Maschinenteils (24) befestigt ist.

4. Lagerung nach Anspruch 1, gekennzeichnet dadurch, daß das Auflager (23) ein Gummilager ist.

**Claims**

1. A supporting arrangement for a vibrating component (1), comprising a support (23) which is supported on a machine part (24), a bearing mount which is supported on the support (23) by a spring body, and an inertia mass (32) which can be moved back and forth by a drive parallel to the direction of the operationally introduced vibrations, is spring-mounted, can be moved in a controlled manner in the opposite direction relative to the exciting vibration and is connected to the support (23) by means of a spring (28), the inertia mass (32) and the spring (28) not being contacted by a liquid, characterized in that the inertia mass (32) and the spring (28) are held in a housing (33) which is separate from the arrangement consisting of the support (23), the bearing mount and the spring body.

2. A supporting arrangement according to claim 1, characterized in that the ratio of the respective sizes of the inertia mass (32) and the vibrating component (1) is from 1/100 to 1/1000.

3.  A supporting arrangement according to either of claims 1 and 2, characterized in that the housing (33) is attached to the side of the machine part (24) remote from the support (23).

4.  A supporting arrangement according to claim 1, characterized in that the support (23) is a rubber mount.


**Revendications**

1.  Suspension pour un élément vibrateur (1), comprenant un support (23) appuyé sur un élément de machine (24), un appui appuyé sur le support (23) par un corps élastique et une masse d'inertie (32) pouvant être animée d'un mouvement de va-et-vient par une commande parallèlement à la direction des vibrations déclenchées dans les conditions d'utilisation, qui est montée de manière élastique et peut effectuer un mouvement réglable dans le sens contraire à la vibration d'excitation, et qui est reliée au support (23) par un ressort (28), la masse d'inertie (32) et le ressort (28) n'étant pas en contact avec un liquide, caractérisée en ce que la masse d'inertie (32) et le ressort (28) sont logés dans une cage (33) séparée de l'arrangement formé par le support (23), l'appui et le corps élastique.

2.  Suspension selon la revendication 1, caractérisée en ce que le rapport des grandeurs respectives de la masse d'inertie (32) et de l'élément vibrateur (1) va de 1/100 à 1/1000.

3.  Suspension selon l'une des revendications 1 à 2, caractérisée en ce que la cage (33) est fixée sur le côté de l'élément de machine (24) éloigné du support (23).

4.  Suspension selon la revendication 1, caractérisée en ce que le support (23) est un support en caoutchouc.

Fig.1

Fig.2